# EUROPEAN PATENT APPLICATION

(11) **EP 4 810 167 A1**
(43) Date of publication of application: **23.09.2026**
(21) Application number: 25201332.1
(22) Date of filing: 10.09.2025
(51) Int. Cl.: B05B 16/60, B64F 5/10

(54) **PAINT BOOTH**

(30) Priority: 18.03.2025 KR 20250034459
(71) Applicant: Hyundai Motor Company, Seoul 06797 (KR); Kia Corporation, Seoul 06797 (KR)
(72) Inventor: SON, Ki Yeob, Hwaseong-si, Gyeonggi-do (KR); JO, Joon Ho, Hwaseong-si, Gyeonggi-do (KR); CHOI, Seung Yeon, Hwaseong-si, Gyeonggi-do (KR); OH, Se Hong, Hwaseong-si, Gyeonggi-do (KR); LEE, Chang Hoon, Hwaseong-si, Gyeonggi-do (KR); LIM, Woo Tae, Hwaseong-si, Gyeonggi-do (KR)
(74) Representative: Viering, Jentschura & Partner mbB Patent- und Rechtsanwälte

(57) **Abstract**

A paint booth that allows air to flow evenly comprises: a painting chamber having a ceiling and a plurality of side walls; an air supply port for supplying external air to the painting chamber; and an air exhaust port for discharging internal air of the painting chamber. The plurality of side walls include a first side wall and a second side wall located opposite the first side wall, the air supply port is arranged relatively adjacent to the first side wall on the ceiling, and the air exhaust port is arranged at the lower part of the second side wall.

## Description

### TECHNICAL FIELD

The present disclosure relates to a paint booth that allows air to flow evenly without a weak point in airflow formation, for example, when an object to be painted is an aircraft.

### BACKGROUND

Painting systems have been developed mainly for relatively simple box-shaped objects to be painted, such as automobiles. Such box-shaped objects to be painted are mostly flat and have a large surface area, so painting work using an automated robot arm may be relatively easy. Such simple-structured objects to be painted have few obstacles on the surface, and uniform spraying of paint is possible, making it relatively easy to maintain consistent painting quality.

An aircraft, for example, may include various components such as wings, horizontal tail fins, vertical tail fins, and landing gear, that make a geometric shape of the aircraft considerably more complex than that of a box-shaped object to be painted.

This complex shape causes various limitations in realizing high-quality painting with some painting systems. For example, in order to maintain a constant temperature, humidity, and cleanliness in a paint booth of a paint system, air may be supplied from an air conditioning unit. The air may be supplied from above (e.g., from a ceiling of the paint booth to a floor of the paint booth).

In the case of a complex shape of an aircraft, for example, air may not be supplied smoothly from above (e.g., under the wings and/or horizontal tail fins), so there may be weak points in airflow formation. This disrupted airflow may cause uneven painting and/or degrades overall paint quality. A solution to provide even airflow without substantially increasing the capacity of an air conditioning unit and/or without increasing the amount of equipment/energy used for airflow is needed.

The matters described in this Background section are only for enhancement of understanding of the background of the disclosure, and should not be taken as acknowledgement that they correspond to prior art already known to those skilled in the art.

### SUMMARY

The following summary presents a simplified summary of certain features. The summary is not an extensive overview and is not intended to identify key or critical elements.

Systems, apparatuses, and methods are described for a paint booth.

A paint booth may comprise: a painting chamber having a ceiling and a plurality of side walls; an air supply port configured to supply air to the painting chamber; and an air exhaust port configured to discharge internal air of the painting chamber, wherein: the plurality of side walls comprise a first side wall and a second side wall located opposite to the first side wall, the air supply port is arranged on the ceiling in a position relatively closer to the first side wall than to the second side wall, and the air exhaust port is arranged on a lower part of the second side wall.

The air supply port may be configured to receive the air from an air supply duct arranged on an outside of the painting chamber, and the air supply duct may be configured to direct air parallel to the ceiling.

The air supply duct may comprise a first duct configured to receive the air from an external air source and a second duct arranged downstream of the first duct and configured to receive the air from the first duct.

The first duct may comprise: a first inlet configured to introduce the air from the external air source, and a plurality of first outlets configured to transfer the air to the second duct, and the plurality of first outlets are arranged closer to the first side wall than the first inlet is to the first side wall.

A width of the first duct may increase from an upstream side to a downstream side.

The second duct may comprise: a plurality of second inlets, formed on a first side of the second duct, configured to introduce the air from the first duct to the second duct, and a second outlet, on a lower surface of the second duct, configured to be connected to the air supply port.

The plurality of second inlets may be positioned to correspond to a plurality of first outlets, of the first duct, configured to communicate the air to the second duct.

The paint booth may further comprise a plurality of first air supply filters, wherein each first air supply filter, of the plurality of first air supply filters, is configured to filter air flowing between a first outlet, of the plurality of first outlets, and a corresponding second inlet of the plurality of second inlets.

The plurality of first air supply filters may be further configured to decompress air flowing between the plurality of first outlets and the plurality of second inlets.

The air supply duct may comprise a first air supply filter between the first duct and the second duct, and the painting chamber comprises a second air supply filter configured to filter air flowing between the second duct and the air supply port.

The air exhaust port may be arranged at a lower end of the second side wall and connected to a floor of the painting chamber on the second side wall.

The air exhaust port may be configured to discharge air from the painting chamber to an air exhaust duct arranged on an outside of the painting chamber, and the air exhaust duct may be configured to direct air parallel to the second side wall.

The air exhaust duct may comprise: a third inlet, on a first side of the air exhaust duct, configured to introduce the air from the painting chamber into the air exhaust duct, and a third outlet formed on an upper surface of the air exhaust duct, and wherein a width of the air exhaust duct may decrease from the third inlet to the third outlet.

The painting chamber may comprise an air exhaust filter configured to filter air flowing between the air exhaust duct and the air exhaust port.

An area and height of the painting chamber and a length and width of the air supply port may cause the painting chamber to have a number of ventilation times of 25 or more times per hour and an air supply amount of less than 800 [m³/min].

A lengthwise dimension of the painting chamber may have a value of at least 1.2 times a lengthwise dimension of an object to be painted, and a widthwise dimension of the painting chamber may have a value of at least 1.2 times a widthwise dimension of the object to be painted.

A length of the air supply port, in a direction parallel to the widthwise dimension of the painting chamber, is 0.7 to 1 times the widthwise dimension of the painting chamber; a width of the air supply port, in a direction parallel to the lengthwise dimension of the painting chamber, may be greater than 0 but less than 0.2 times the lengthwise dimension of the painting chamber; and a shortest distance between the air supply port and the first side wall may be 0 to 0.1 times the lengthwise dimension of the painting chamber.

A length of the air exhaust port, in a direction parallel to the widthwise dimension of the painting chamber, may be 0.7 to 1 times the widthwise dimension of the painting chamber.

A heightwise dimension of the painting chamber may have a value of at least 1.6 times a heightwise dimension of an object to be painted; and a height of the air exhaust port, in a direction parallel to the heightwise dimension of the painting chamber, may be greater than 0 but less than 0.5 times the heightwise dimension of the painting chamber.

A paint booth may comprise: a painting chamber having a ceiling, a floor disposed opposite the ceiling, and enclosing side walls connecting the ceiling to the floor; an air supply port for supplying air to the painting chamber; and an air exhaust port for discharging internal air of the painting chamber, wherein: the air supply port is arranged on the ceiling in a position relatively closer to a first side of the paint booth than to a second side, of the paint booth, opposite the first side, and the air exhaust port is arranged in a portion of the enclosing side walls on the second side of the paint booth and is relatively closer to the floor than to the ceiling.

These and other features and advantages are described in greater detail below.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a drawing illustrating the concept of a paint booth according to an example of the present disclosure;
FIG. 2 is a drawing illustrating a paint booth according to an example of the present disclosure; and
FIG. 3 is a side view illustrating a part of the paint booth of Fig. 2.

### DETAILED DESCRIPTION

While the present disclosure may be modified in various manners and take on various alternative forms, specific examples thereof are illustrated in the drawings and described in detail below. However, it should be understood that there is no intent to limit the present disclosure to the particular forms in the examples described. The present disclosure covers all modifications, equivalents, and alternatives falling within the spirit and scope of the present disclosure.

It will be understood that, although the terms "first," "second," etc. may be used herein to describe various elements, these elements should not be limited by these terms. These terms are only used to distinguish one element from another. For example, a first element could be termed a second element, and a second element could similarly be termed a first element without departing from the scope of the present disclosure.

For purposes of this application and the claims, using the exemplary phrase "at least one of: A; B; or C" or "at least one of A, B, or C," the phrase means "at least one A, or at least one B, or at least one C, or any combination of at least one A, at least one B, and at least one C. Further, exemplary phrases, such as "A, B, or C", "at least one of A, B, and C", "at least one of A, B, or C", etc. as used herein may mean each listed item or all possible combinations of the listed items. For example, "at least one of A or B" may refer to (1) at least one A; (2) at least one B; or (3) at least one A and at least one B. "One or more of" is synonymous with "at least one of" herein.

As used herein, the term "and/or" includes any and all combinations of one or more of the associated listed items.

The terms, such as "unit", "part", "portion", etc., may be used to describe various components, but the components should not be limited by these terms. The above terms may refer to physically/visually distinct components of the subject matter disclosed herein, and/or to portions of one or more components configured to perform functions and/or serve a structural role of the subject matter disclosed herein, even if the corresponding one or more components are not clearly physically/visually distinct.

The terms used herein to describe examples of the present disclosure is not intended to limit the scope of the present disclosure. The articles "a," and "an" are singular in that they have a single referent, however the use of the singular form in the present document should not preclude the presence of more than one referent. In other words, elements of the present disclosure referred to in the singular may number one or more, unless the context clearly indicates otherwise.

It will be further understood that the terms "comprise," "comprising," "include," and/or "including," when used herein, specify the presence of stated features, numbers, steps, operations, elements, and/or components but do not preclude the presence or addition of one or more other features, numbers, steps, operations, elements, components, and/or groups thereof.

The expression "based on" as used herein is intended to describe one or more factors that influence an act or operation of determining or deciding described in a phrase or sentence including that expression, and this expression does not exclude any additional factors that influence the act or operation of determining or deciding.

When it is described that a component (e.g., a first component) is "connected" or "coupled" to another component (e.g., a second component) as used herein, it may mean that the component is not only directly connected or coupled to another component, but also connected or coupled through yet another component (e.g., a third component).

Depending on the context, the expression "configured to" as used herein may have meanings such as "set to", "with the ability to", "modified to", "made to", "to be able to", etc. This expression is not limited to the meaning of "specially designed in hardware to". For example, a processor configured to perform a specific operation may refer to a generic purpose processor capable of performing the specific operation by executing software, or to a special purpose computer structured through programming to perform the specific operation.

The term "about" in relation to a reference numerical value, and its grammatical equivalents as used herein, can include the reference numerical value itself and a range of values plus or minus 10% from that reference numerical value. For example, the term "about 10" includes 10 and any amount from and including 9 to 11. In some cases, the term "about" in relation to a reference numerical value can also include a range of values plus or minus 10%, 9%, 8%, 7%, 6%, 5%, 4%, 3%, 2%, or 1% from that reference numerical value. In some embodiments, "about" in connection with a number or range measured by a particular method indicates that the given numerical value includes values determined by the variability of that method.

Unless defined in a different way, all the terms used herein including technical and scientific terms have the same meanings as understood by those skilled in the art to which the present disclosure pertains. Such terms as defined in generally used dictionaries should be construed to have the same meanings as those of the contexts of the related art, and unless clearly defined in the application, they should not be construed to have ideally or excessively formal meanings.

Metal products may be subject to corrosion by oxidation in the air (e.g., over time). A certain paint may be applied to a surface of the metal product to prevent the metal from being exposed to the air in order to avoid this corrosion.

Accordingly, manufacturing processes of automobiles and/or aircrafts may include a painting process in which corrosion-preventing paint is applied to the surface and dried. The painting process may provide a three-dimensional color sense to products such as automobiles or aircrafts, thereby further enhancing the appearance of the products and improving their value as a product.

A paint booth may comprise a facility in which painting of the object to be painted may be performed. The painting may be performed by a spray gun mounted on a robot arm spraying the paint. The object to be painted may be placed inside a painting chamber, of the paint booth, equipped with a door (e.g., to allow access for an object to be painted and/or an operator). The spray gun mounted on the robot arm may be configured to spray paint in the paining chamber. By raising the external air to an appropriate temperature (e.g., about 60°C) and supplying the warmed external air into an interior of the painting chamber, the paint on the surface of the painted object may be dried.

The paint booth may have an air supply port located on (e.g., formed in) the upper inner side of the painting chamber, and an air exhaust port located on the lower inner side of the painting chamber.

For example, an air supply port may be located in/on the ceiling of the painting chamber. A pair of air exhaust ports may be located at the lower side of each side wall of the painting chamber. In such a painting chamber, if the aircraft is the object to be painted and is placed in the painting chamber, air may not be smoothly supplied under the wings and horizontal tail fins, which may result in a weak point in airflow formation, causing uneven painting and/or overall deterioration of painting quality.

Since a pair of air exhaust ports are provided in the example, the number and capacity of exhaust-related devices and/or parts increase, thereby increasing the cost of using facilities and energy.

As another example, an air supply port may be arranged in the upper part of each side wall, adjacent to the ceiling of the painting chamber, and an air exhaust port may be arranged on/in the floor of the painting chamber. In such a painting chamber, air may be more smoothly supplied under the wings compared to the previously discussed example in which the air supply ports are arranged in the ceiling, but there may still be a weak point in airflow formation. Also, since a pit for an air exhaust port must be installed in addition to a pair of air supply ports, not only may the number of air supply-related devices and/or parts increase relative to the previous example, but the volume of the paint booth may also increase for the installation of the pit, which may ultimately lead to a problem of a significant increase in the cost of constructing the facility.

Accordingly, the present disclosure proposes a paint booth having an improved configuration and size so that air may flow evenly without a weak point in airflow formation, even when the object to be painted is an aircraft, and the cost and materials required for constructing the facility and using energy may be reduced.

Hereinafter, a preferred example of the present disclosure will be described in more detail with reference to the attached drawings.

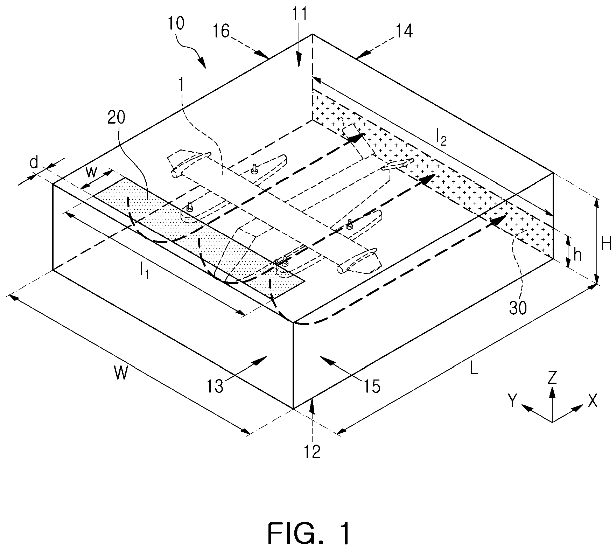

FIG. 1 is a drawing illustrating the concept of a paint booth according to an example of the present disclosure.

The paint booth according to an example of the present disclosure may include a painting chamber 10, one air supply port 20, and one air exhaust port 30.

The painting chamber 10 may have a ceiling 11, a floor 12, and a plurality of side walls (e.g., and/or enclosing side wall(s)). For example, the painting chamber 10 may be formed as a hexahedral structure, and accordingly, the painting chamber may have a ceiling 11, a floor 12, and four side walls 13-16.

The air supply port 20 may be arranged in the ceiling 11 of the painting chamber 10. The air supply port 20 may be positioned adjacent to (e.g., relatively closest to) a first side wall 13 of the four side walls 13-16. The air supply port may supply external air to an interior of the painting chamber.

The air exhaust port 30 may be arranged on one of the side walls of the painting chamber 10. The air exhaust port 30 may be arranged/positioned on a lower side of a second side wall 14, located opposite to the first side wall 13, for example, (e.g., at the lower end of the second side wall). The air exhaust port may discharge the inside air of the painting chamber to an outside of the painting chamber.

The side of the painting chamber 10 toward the first side wall 13 may be referred to as the front, and the side of the painting chamber 10 toward the second side wall 14 may be referred to as the rear. The remaining side walls connecting the first side wall and the second side wall may be referred to as a third side wall 15 and a fourth side wall 16.

A direction from the first side wall 13 toward the second side wall 14 or a direction opposite thereto may be referred to as a longitudinal direction X. A direction from the third side wall 15 toward the fourth side wall 16 or a direction opposite thereto may be referred to as a width direction Y. A direction from the ceiling 11 toward the floor 12 or a direction opposite thereto may be referred to as a height direction Z.

By arranging the air supply port 20 and the air exhaust port 30 in the painting chamber 10 as described with respect to FIG. 1, air may flow evenly without a weak point in airflow formation, even if the object to be painted 1 is an aircraft (e.g., air may flow evenly even under a wing of the aircraft).

According to the paint booth according to an example of the present disclosure, since the painting chamber 10 is provided with a single air supply port 20 and a single exhaust port 30, the cost required to increase the capacity of the air conditioning unit or build the equipment required for air conditioning may be reduced.

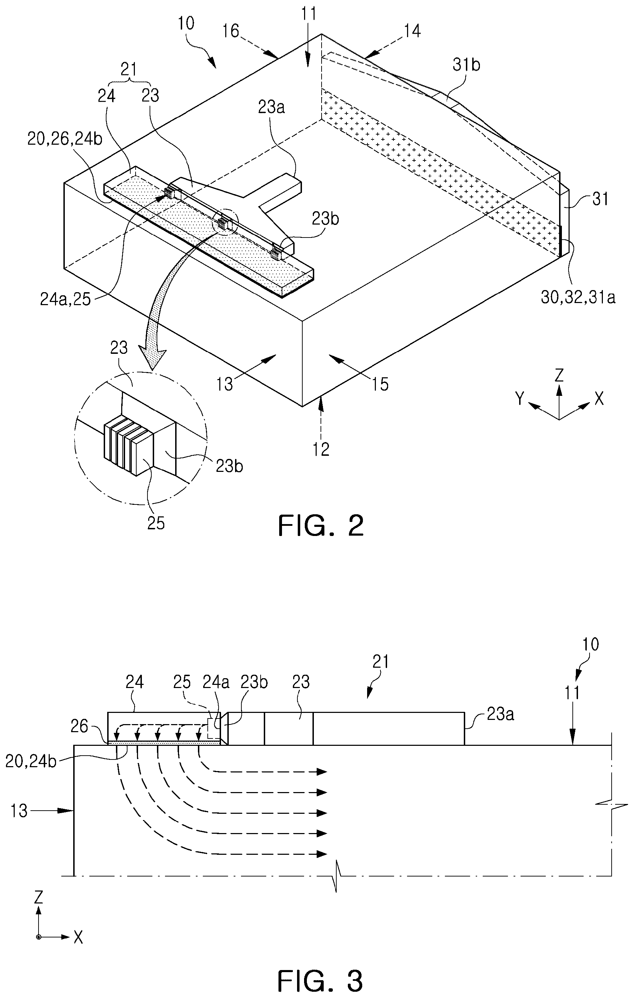

FIG. 2 is a drawing illustrating a paint booth according to an example of the present disclosure, and FIG. 3 is a side view illustrating a part of the paint booth of FIG. 2. With reference to FIG. 2 and FIG. 3, the paint booth of an example of the present disclosure will be described in more detail.

The painting chamber 10 may be provided with a door for allowing entering and exiting of the object to be painted (or operator). A spray gun mounted on a robot arm, for example, may be placed in the interior space of the painting chamber to apply a paint to the object to be painted 1 in a spray manner. For convenience, detailed descriptions and drawings of the door, robot arm, and spray gun will be omitted.

The air supply port 20 may be provided on the ceiling 11 of the painting chamber 10, and the air exhaust port 30 may be provided on the lower part of one of the side walls of the painting chamber.

The air supply port 20 may be arranged adjacent to the first side wall 13 on the ceiling 11 of the painting chamber 10. The air supply port may be installed to communicate with an air supply duct 21 arranged on the outside of the painting chamber (e.g., to receive air from the air supply duct 21).

The air supply duct 21 may include a first duct 23 arranged relatively upstream from the air supply port 20, and a second duct 24 arranged relatively downstream to the air supply port 20. An air supply fan, a heater, etc. may be provided upstream of the air supply duct 21, e.g., upstream of the first duct. Also, optionally or as needed, a humidifier may be provided.

The first duct 23 may have a single first inlet 23a through which external air may be introduced on a first side of the first duct 23 (e.g., a rear side of the first duct 23 in the front-rear direction, away from the front/first side wall 13 of the painting chamber 10), and a plurality of first outlets 23b, provided to communicate with (e.g., exchange air with/input air to) the second duct 24, may be formed on a second side first duct 23 (e.g., a front side of the first duct 23, towards the front/first side wall 13 of the painting chamber 10). Here, the front-rear direction of the first duct is parallel to the longitudinal direction X of the painting chamber 10. The plurality of first outlets may be disposed relatively adjacent to the first side wall 13 of the painting chamber than the first inlet.

Although FIG. 2 illustrates three first outlets 23b, this is not necessarily limited, and as long as the external air may be evenly divided, the number of first outlets may be two or more, without any particular limitation.

The first duct 23 may be formed so that the width of the first duct in a left-right direction increases (e.g., gradually and/or in stages) from the first side (e.g., the upstream side), where the first inlet 23a is arranged, to the second side, (e.g., the downstream side), where the first outlets 23b are arranged. Here, the left-right direction of the first duct is parallel to the width direction Y of the painting chamber 10.

Thereby, the external air supplied to the first duct 23 through the first inlet 23a (e.g., by pressure applied by an air supply fan) spreads along the shape of the first duct and may be discharged from the first duct toward the second duct 24 while branching through the plurality of first outlets 23b.

A plurality of first air supply filters 25, such as a bag filter, may be interposed between the first duct 23 and the second duct 24. The plurality of first air supply filters may be arranged to correspond to each first outlet 23b. The external air discharged from the first duct 23 may pass through the plurality of the first air supply filters (e.g., air from each first outlet 23b may pass through a corresponding first air supply filter 25) and, for example, foreign substances or moisture may be filtered out.

The first air supply filters 25 may connect the first duct 23 and the second duct 24 (e.g., be between the first duct 23 and the second duct 24 and/or be positioned at the interface between the first duct 23 and the second duct 24 where air is exchanged). The first air supply filters 25 may filter the external air supplied from the first duct and decompress the supply pressure of the external air. Due to the decompression of the external air, the formation of vortices due to overpressure may be reduced, which may contribute to achieving the advantage of uniform air supply.

The second duct 24 may have a plurality of second inlets 24a through which external air is introduced on a first side (e.g., a rear side of the second duct 24 in the front-rear direction, a side away from the front side wall 13). The second duct 24 may comprise a single second outlet 24b, connected to (e.g., configured to exchange/supply air to) the air supply port 20, on a second side of the second duct 24, which may comprise a lower surface of the second duct 24, which is a lower side in the up-down direction. Here, the front-rear direction of the second duct is parallel to the longitudinal direction X of the painting chamber 10, and the up-down direction of the second duct 24 is parallel to the height direction Z of the painting chamber.

Each second inlet 24a may communicate with (e.g., receive air from) the corresponding first outlet 23b of the first duct 23. A first air supply filter 25 may be installed substantially between each second inlet 24a and the corresponding first outlet 23b.

Although FIG. 2 shows three second inlets 24a, this is not necessarily limited thereto, and if the external air may be evenly divided and flowed, the number of second inlets may be two or more, corresponding to the number of first outlets 23b.

The second duct 24 may be formed as an approximately rectangular hexahedral structure. The second duct 24 may extended (e.g., have a longer/longest dimension) along the width direction Y of the painting chamber 10. The second outlet 24b (e.g., on the second/lower side of the second duct may have the same area as the area of the air supply port 20, but is not necessarily limited thereto.

Therefore, the external air filtered by the first air supply filters 25 and supplied to the second duct 24 via the plurality of second inlets 24a may spreads along the shape of the second duct, and at the same time, the flow direction may be changed (e.g., from horizontal to vertical), and may be discharged from the second duct toward the air supply port 20 and the interior of the painting chamber 10 through the second outlet 24b.

A second air supply filter 26 (e.g., made of a fiber material) may be installed between the second duct 24 and the air supply port 20 and/or in the air supply port itself. The second air supply filter 26 may be spread over the entire area of the air supply port 20 to cover the entire air supply port.

The external air discharged from the second duct 24 meets the second air supply filter 26 and for example, foreign substances or moisture is further filtered, so that clean external air may be supplied into the painting chamber 10.

The air supply duct 21 configured as disclosed may be arranged horizontally on the ceiling 11 of the painting chamber 10 (e.g., for airflow from external to the air supply duct 21 to the air supply port 20 to be substantially horizontal/parallel to the ceiling 11). In other words, the air supply duct 21 may be arranged parallel to the longitudinal direction X and the width direction Y of the painting chamber 10. By arranging the air supply duct 21 horizontally, the height of the air supply duct 20 may be reduced (e.g., maintained at about 1 m or less).

By installing the air supply duct 21 horizontally, allowing for a low the height, the paint booth 10 according to an example of the present disclosure may have a reduced volume compared to a paint booth having a conventional vertical air supply duct. Accordingly, the cost for facility construction may be significantly reduced and maintenance may be easily performed.

Since the airflow spreads out in the left-right direction from the center of the air supply duct 21 and is depressurized by the first air supply filters 25, the external air may be uniformly supplied from the air supply port 20.

The air exhaust port 30 may be arranged at the lower part of the second side wall 14 located opposite the first side wall 13 among the side walls of the painting chamber 10. For example, the air exhaust port 30 may be arranged at a lower end of the second side wall 14, where the lower end is connected to the floor 12. The air exhaust port 30 may be installed to communicate with the air exhaust duct 31 arranged on the outside of the painting chamber.

An air exhaust fan or the like may be provided downstream of the air exhaust duct 31. For example, the air supply fan may also serve as an air exhaust fan.

The air exhaust duct 31 may be formed with a single third inlet 31a through which the internal air of the painting chamber 10 may be introduced on a first side in the front-rear direction, and a single third outlet 31b provided on the second surface (e.g., an upper surface in the up-down direction). Here, the front-rear direction of the air exhaust duct may be parallel to the longitudinal direction X of the painting chamber, and the up-down direction of the air exhaust duct is parallel to the height direction Z of the painting chamber.

The air exhaust duct 31 may have a cross-sectional shape that is, for example, a combination of a rectangle and a trapezoid. The air exhaust duct may be formed so that the width of the air exhaust duct in the left-right direction decreases (e.g., gradually) from a first width at an intermediate height (e.g., a middle height or higher) to a second width, smaller than the first width, of an upper surface where the third outlet 31b is arranged. The left-right direction of the air exhaust duct is parallel to the width direction Y of the painting chamber 10.

The shape of the air exhaust duct 31 is not necessarily limited to the example described and illustrated above. An air exhaust duct having another shape may be employed, so long as the shape of the air exhaust duct allows for smooth discharge of air from the painting chamber 10.

The internal air of the painting chamber 10 that is uniformly discharged to the air exhaust duct 31 via the air exhaust port 30 and the third inlet 31a by applying negative pressure by the air exhaust fan may be collected along the shape of the air exhaust duct 31 and may be smoothly discharged from the air exhaust duct through the third outlet 31b.

An air exhaust filter 32 (e.g., made of a fiber material and equipped with activated carbon) may be installed between the air exhaust duct 31 and the air exhaust port 30 and/or in the air exhaust port itself. The air exhaust filter may cover the entire air exhaust port by spreading over the entire area of the air exhaust port.

The internal air of the painting chamber 10 discharged from the air exhaust port 30 may pass through the air exhaust filter 32, and harmful components (e.g., used in, for example, applying or drying paint) may be filtered out, thereby allowing clean internal air to be discharged outside the painting chamber 10.

The air exhaust duct 31 configured in this way may be arranged vertically on the second side wall 14 of the painting chamber 10 and parallel to the second side wall 14 (e.g., such that airflow through the air exhaust duct 31, from the third inlet 31a to the third outlet 31b, is substantially parallel to the second side wall 14). In other words, the air exhaust duct may be arranged parallel to the height direction Z of the painting chamber 10.

By vertically installing the air exhaust duct 31 and positioning it on the second side wall 14, the paint booth 10 according to an example of the present disclosure may reduce the volume compared to a paint booth having the vertical air exhaust duct installed under the floor, for example. Thus, the cost for facility construction may be significantly reduced and maintenance may be easily performed by the paint booth 10 as disclosed.

In the paint booth 10, according to an example of the present disclosure, in order to improve the efficiency of the paint process and promote drying, a process may be performed in which external air is introduced into the painting chamber 10 and the internal air of the painting chamber is discharged to the outside.

Specifically, after the paint is applied, the air supply fan may be operated so that the external air is brought down from the upper part of the painting chamber 10 (e.g., the ceiling 11, through the air supply port 20 from the air supply duct 21, and then the flow direction may be changed so that the air flows along the longitudinal direction X of the painting chamber to dry the painted object 1. The internal air of the painting chamber may be discharged to the air exhaust duct 31 through the air exhaust port 30.

The control of pollutant transport by the airflow inside the painting chamber 10 may be evaluated using an index of ventilation efficiency. An air life may be mainly used as an index for evaluating the ventilation efficiency. The air life refers to the time it takes for the air introduced from the air supply port 20 to reach a certain location, and the unit of air life is a value based on the nominal ventilation time. The nominal ventilation time refers to the time it takes for the air inside the painting chamber to be completely replaced, that is, for ventilation.

The analysis of air life includes an experimental method and a simulation method, and a representative method of simulation is a simple calculation using Computational Fluid Dynamics (CFD).

The average ventilation efficiency using the air life may be obtained by Equation 1 below. ${ε}_{ν} = \frac{τ}{{θ}_{age}} = \frac{V}{Q} ⋅ \frac{1}{{θ}_{age}} = \frac{V}{A ⋅ u} ⋅ \frac{1}{{θ}_{age}}$

Here, εᵥ is the average ventilation efficiency [dimensionless], and τ is the nominal ventilation time, which may be obtained by dividing the volume of the painting chamber 10 (V [m³], e.g., an internal volume of the space formed between the ceiling 11, floor 12 and side walls 13-16) by the air supply amount (Q [m³/min]). The air supply amount may be obtained by multiplying the area of the air supply port 20 (A [m²]) and the air supply velocity (u [m/s]). Here, the reciprocal of the nominal ventilation time is called the number of ventilation times (N [1/h]).

θ_{age} is the air life, which means the average value of the times that the air passes through the contaminated section, that is, the painted object. θ_{age} may be calculated using CFD using Equation 2 below. ${θ}_{age} = {\int }_{0}^{∞} \frac{Cp \left(t\right)}{Co} dt$

Here, Co is the background concentration of the contaminant [ppm], and Cp(t) is the concentration of the contaminant [ppm] at the measurement time t at an arbitrary measurement point in the painting chamber 10.

The airflow rate u was set to a constant value (e.g., 0.3 [m/s]), and the target value of the average ventilation efficiency εᵥ, was determined. The analysis models were analyzed using CFD (e.g., according to equations 1-2) to determine the effects of varying the volume V of the painting chamber 10 and the area A of the air supply port 20 on the ventilation efficiency. An example model (e.g., volume/dimensions of the ) was selected, based on the analysis, to have a size that produce the target value of the average ventilation efficiency εᵥ.

First, conditions regarding the size of the painting chamber 10 may be set.

For example, a lengthwise dimension L of the painting chamber 10 may have a value that is at least about 1.2 times the lengthwise dimension of the object to be painted 1. This length may secure a space for movement and work of the operator. In the case that the object to be painted is an aircraft, the lengthwise dimension of the painting chamber may be at least 1.2 times the length of the fuselage.

A widthwise dimension W of the painting chamber 10 may have a value that is at least 1.2 times the widthwise dimension of the object to be painted 1. This length is intended to secure a space for movement and work of the operator. In the case that the object to be painted is an aircraft, the widthwise dimension of the painting chamber may be at least about 1.2 times the length of the wing.

A heightwise dimension H of the painting chamber 10 may have a value that is at least 1.6 times the heightwise dimension of the object to be painted 1. This height is to secure the space required for the painting process (e.g., robot arm, etc.) and to maintain smooth airflow. In the case that the object to be painted is an aircraft, the heightwise dimension of the painting chamber may be at least about 1.6 times the height of the aircraft.

Conditions regarding the size and position of the air supply port 20 may be set. The size of the air supply port 20 may be set in consideration of the size of the object to be painted 1.

For example, the length l₁ of the air supply port 20 (e.g., the length parallel to the width direction Y of the painting chamber 10) may have a dimension of about 0.7 to 1 times the widthwise dimension W of the painting chamber.

The width w of the air supply port 20 (e.g., the length parallel to the length direction X of the painting chamber 10) may have a dimension that exceeds 0 but less than about 0.2 times the lengthwise dimension L of the painting chamber.

A degree to which the air supply port 20 is adjacent to the first side wall 13 may be a distance d, which may be from 0 to about 0.1 times of the lengthwise dimension L of the painting chamber 10.

Conditions regarding the size of the air exhaust port 30 may be set. The size of the air exhaust port may be set in consideration of the size of the object to be painted 1. This size of the air exhaust port does not affect the calculation of the average ventilation efficiency.

For example, the length l₂ of the air exhaust port 30 (the length parallel to the width direction Y of the painting chamber 10) may have a dimension of a about 0.7 to 1 times the widthwise dimension W of the painting chamber.

The height h of the air exhaust port 30 (the length parallel to the height direction Z of the painting chamber 10) may have a dimension exceeding 0 but less than about 0.5 times the heightwise dimension H of the painting chamber.

Among the models that produce the target value of the average ventilation efficiency εᵥ while satisfying the conditions regarding such size outlined above, it was found that the higher the number of ventilation times N is and the lower the air supply amount Q is, the better (e.g., the closer to producing the target value of the average ventilation efficiency). Thus, filtering may be done based on the predetermined values of the number of ventilation times and the air supply amount.

For example, models with the number of ventilation times N of less than 25 times per hour were discarded, and models with air supply amounts Q of 800 [m³/min] or more were discarded.

Finally, evaluation may be performed based on the number of ventilation times N, the air supply amounts Q, and the size (area and height of the painting chamber 10). Models may be evaluated by varying the weights in the order of the number of ventilation times, the air supply amounts, and the size.

For example, models with the number of ventilation times N of 40 times per hour or more may be evaluated as the best in the number of ventilation times category, or models with air supply amounts Q of about 500 [m³/min] or less may be evaluated as the best in air supply amount category. Among models evaluated as satisfying the best conditions in both the number of ventilation times category and air supply amount category, the model with the highest evaluation may be finally adopted.

For example, in the case where a specific type of aircraft is the object to be painted 1, the specifications of the paint booth according to an example of the present disclosure may be selected based on criteria such as the highest number of ventilation times, good air supply amount, and minimum size, as follows.

Among the sizes of the painting chamber 10, the length L may be about 21.6 m, the width W may be about 20 m, and the height H may be about 5 m.

In addition, among the sizes of the air supply port 20, the length l₁ may be about 14 m, and the width w may be about 3 m.

In addition, among the sizes of the air exhaust port 30, the length l₂ may be about 20 m, and the height h may be about 2.2 m.

The number of ventilation times N of the painting chamber 10 with such sizes may be 41 times per hour, and the air supply amount Q may be estimated as about 756 [m³/min].

An aspect of the present disclosure is to provide a paint booth in which air may flow evenly without weak points in airflow formation, for example, even when the object to be painted is an aircraft, and the costs required for building equipment and using energy may be reduced.

According to an aspect of the present disclosure, a paint booth may include a painting chamber having a ceiling and a plurality of side walls; an air supply port for supplying external air to the painting chamber; and an air exhaust port for discharging internal air of the painting chamber, and wherein the plurality of side walls may comprise a first side wall, and a second side wall located opposite the first side wall, and the air supply port may be arranged relatively adjacent to the first side wall on the ceiling, and the air exhaust port may be arranged at the lower part of the second side wall.

The air supply port may be installed to communicate with an air supply duct arranged on the outside of the painting chamber, and the air supply duct may be arranged horizontally in the ceiling.

The air supply duct may include a first duct arranged on the upstream side and a second duct arranged on the downstream side.

The first duct may include a first inlet formed on the upstream side to introduce the external air, and a plurality of first outlets provided on the downstream side to communicate with the second duct, and the plurality of first outlets may be arranged relatively adjacent to the first side wall than the first inlet.

The first duct may be formed such that a width of the first duct gradually increases from the upstream side to the downstream side.

The second duct may include a plurality of second inlets formed on one side to introduce the external air from the first duct, and a second outlet provided on the lower surface to be connected to the air supply port.

The air supply duct may include a first air supply filter interposed between the first duct and the second duct, and the painting chamber may include a second air supply filter installed between the second duct and the air supply port or in the air supply port.

The air exhaust port may be arranged at a lower end connected to a floor of the painting chamber on the second side wall.

The air exhaust port may be installed to communicate with an air exhaust duct arranged on the outside of the painting chamber, and the air exhaust duct may be arranged vertically, parallel to the second side wall.

The air exhaust duct may include a third inlet formed on one side to introduce the internal air of the painting chamber, and a third outlet formed on an upper surface, and the air exhaust duct may be formed such that a width of the air exhaust duct gradually decreases toward the upper surface at least partially.

The painting chamber may include an air exhaust filter installed between the air exhaust duct and the air exhaust port or in the air exhaust port.

The area and height of the painting chamber and the length and width of the air supply port may be determined by considering an average ventilation efficiency.

The painting chamber may have the number of ventilation times of 25 or more times per hour, and an air supply amount of less than 800 [m³/min].

A lengthwise dimension of the painting chamber may have a value of at least 1.2 times a lengthwise dimension of an object to be painted, and a widthwise dimension of the painting chamber may have a value of at least 1.2 times a widthwise dimension of the object to be painted.

A length of the air supply port may have a dimension of 0.7 to 1 times the widthwise dimension of the painting chamber.

A width of the air supply port may have a dimension exceeding 0 but less than 0.2 times the lengthwise dimension of the painting chamber.

A distance between the air supply port and the first side wall may have a range of 0 to 0.1 times the lengthwise dimension of the painting chamber.

The length of the air exhaust port may have a dimension of 0.7 to 1 times the widthwise dimension of the painting chamber.

A heightwise dimension of the painting chamber may have a value of at least 1.6 times a heightwise dimension of the object to be painted.

The height of the air exhaust port may have a dimension exceeding 0 but less than 0.5 times the heightwise dimension of the painting chamber.

According to an example of the present disclosure, a paint booth having optimal specifications is provided, so that, for example, even when the object to be painted is an aircraft, air may flow evenly without a weak point in airflow formation, and the cost required for building the equipment and using energy may be reduced.

According to an example of the present disclosure, a paint booth having optimal specifications is provided, so that air may flow evenly without a weak point in airflow formation, for example, even when the object to be painted is an aircraft, and the effect of reducing the cost required for building the equipment and using energy is obtained.

While example examples have been illustrated and described above, it will be apparent to those skilled in the art that modifications and variations could be made without departing from the scope of the present disclosure as defined by the appended claims.

## Claims

1. A paint booth, comprising:
a painting chamber having a ceiling and a plurality of side walls;
an air supply port configured to supply air to the painting chamber; and
an air exhaust port configured to discharge internal air of the painting chamber, wherein:
the plurality of side walls comprise a first side wall and a second side wall located opposite to the first side wall,
the air supply port is arranged on the ceiling in a position relatively closer to the first side wall than to the second side wall, and
the air exhaust port is arranged on a lower part of the second side wall.

2. The paint booth of claim 1, wherein:
the air supply port is configured to receive the air from an air supply duct arranged on an outside of the painting chamber, and
the air supply duct is configured to direct air parallel to the ceiling.

3. The paint booth of claim 2, wherein the air supply duct comprises a first duct configured to receive the air from an external air source, and a second duct arranged downstream of the first duct and configured to receive the air from the first duct.

4. The paint booth of claim 3, wherein:
the first duct comprises:
a first inlet configured to introduce the air from the external air source, and
a plurality of first outlets configured to transfer the air to the second duct, and
the plurality of first outlets are arranged closer to the first side wall than the first inlet is to the first side wall.

5. The paint booth of claim 3 or 4, wherein a width of the first duct increases from an upstream side to a downstream side.

6. The paint booth of anyone of claims 3-5, wherein the second duct comprises:
a plurality of second inlets, formed on a first side of the second duct, configured to introduce the air from the first duct to the second duct, and
a second outlet, on a lower surface of the second duct, configured to be connected to the air supply port.

7. The paint booth of claim 6, wherein the plurality of second inlets are positioned to correspond to a plurality of first outlets, of the first duct, configured to communicate the air to the second duct.

8. The paint booth of claim 7, further comprising a plurality of first air supply filters, wherein each first air supply filter, of the plurality of first air supply filters, is configured to filter air flowing between a first outlet, of the plurality of first outlets, and a corresponding second inlet of the plurality of second inlets.

9. The paint booth of claim 8, wherein the plurality of first air supply filters are further configured to decompress air flowing between the plurality of first outlets and the plurality of second inlets.

10. The paint booth of anyone of claims 3-9, wherein the air supply duct comprises a first air supply filter between the first duct and the second duct, and
the painting chamber comprises a second air supply filter configured to filter air flowing between the second duct and the air supply port.

11. The paint booth of anyone of claims 1-10, wherein the air exhaust port is arranged at a lower end of the second side wall and connected to a floor of the painting chamber on the second side wall.

12. The paint booth of anyone of claims 1-11, wherein:
the air exhaust port is configured to discharge air from the painting chamber to an air exhaust duct arranged on an outside of the painting chamber, and
the air exhaust duct is configured to direct air parallel to the second side wall.

13. The paint booth of claim 12, wherein the air exhaust duct comprises:
a third inlet, on a first side of the air exhaust duct, configured to introduce the air from the painting chamber into the air exhaust duct, and
a third outlet formed on an upper surface of the air exhaust duct, and
wherein a width of the air exhaust duct decreases from the third inlet to the third outlet.

14. The paint booth of claim 12 or 13, wherein the painting chamber comprises an air exhaust filter configured to filter air flowing between the air exhaust duct and the air exhaust port.

15. The paint booth of anyone of claims 1-14, wherein an area and height of the painting chamber and a length and width of the air supply port cause the painting chamber to have a number of ventilation times of 25 or more times per hour and an air supply amount of less than 800 [m³/min].
